# EUROPEAN PATENT APPLICATION

(11) **EP 1 313 318 A1**
(43) Date of publication of application: **21.05.2003**
(21) Application number: 01954445.1
(22) Date of filing: 06.08.2001
(51) Int. Cl.: H04N 7/173, H04M 15/00, G06F 13/00, G06F 17/60

(54) **DATA TRANSMISSION METHOD AND DATA RELAY METHOD**

(30) Priority: 25.08.2000 JP 2000255068; 29.09.2000 JP 2000300060; 27.10.2000 JP 2000328561; 01.03.2001 JP 2001057388
(71) Applicant: MATSUSHITA ELECTRIC INDUSTRIAL CO., LTD., Kadoma-shi, Osaka 571-8501 (JP)
(72) Inventor: ARAKAWA, Hiroshi, Kyoto-shi, Kyoto 612-8136 (JP); ITOH, Tomoaki, Hirakata-shi, Osaka 573-0165 (JP); SATO, Junichi, Nara-shi, Nara 631-0801 (JP); YAMAGUCHI, Takao, Seika-cho, Soraku-gun, Kyoto 619-0237 (JP); MIYAZAKI, Akihiro, Higashiosaka-shi, Osaka 578-0983 (JP); HATA, Koichi, Katano-shi, Osaka 576-0021 (JP)
(74) Representative: Grünecker, Kinkeldey, Stockmair & Schwanhäusser Anwaltssozietät
(86) International application number: JP0106719
(87) International publication number: WO02017637

(57) **Abstract**

In a sending device (100), a fragmenting portion (101) fragments a bit stream according to the predicted relationship of the frames, and the output of the fragmenting portion (101) is allocated to either a TCP (Transmission Control Protocol) or a UDP (User Datagram Protocol) port. In an IP (Internet Protocol) layer, an encrypting portion (102) executes an encryption process only on the port to which bit stream corresponding to the I (Intra) frames is transmitted. In a receiving device (110), a decrypting portion (112) decrypts data on the port to which the bit stream corresponding to the I frames is transmitted, and a reassembling portion (111) restores the data to the original bit stream. This restoration is carried out by lining up the packets in increasing order of TR (Temporal Reference) value. Thus, the amount of time required for encryption and decryption is reduced compared to a case in which encryption is performed on all frames.

## Description

### TECHNICAL FIELD

The present invention relates to transmission methods and relay methods for video and audio data on a network, and in particular to data transmission in which the data are subjected to an encryption process or an error correction encoding process.

### BACKGROUND ART

Increases in the speed of communication have enabled the transmission of multimedia data (video and audio) using communication lines.

Multicasting is known as a scheme for conveying video and audio to multiple locations over a network using IP (Internet Protocol) and in particular IPv6 (S. Deering et al., "Internet Protocol Version 6 (Ipv6) Specification", RFC 1883, Internet Engineering Taskforce, Dec. 1995). As an encryption scheme, there is IPsec (S. Kent et al., "Security Architecture for the Internet Protocol", RFC 2401, Internet Engineering Taskforce, Nov. 1998).

Using these schemes enables the implementation of VOD (Video On Demand) and PPV (Pay Per View) over a network. That is, persons that have paid a fee are transmitted an encryption key, and with this received key they perform decryption to reproduce the multimedia data. In the case of STBs (Set Top Boxes), hardware is used to perform the decryption. In the case of networks, however, an ordinary computer is often used, and decryption is rarely performed using hardware. The bit rate of video is 2 to 3 Mbps for an image quality in accordance with NTSC (National Television Standards Committee), and is about 10 to 20 Mbps in accordance with HDTV (High Definition Television). All of these data are encrypted and must be decrypted by the receiving device, which causes the risk that software cannot fully execute this operation (first problem).

With networks, and especially the Internet, there has historically been a tendency toward dispersed management rather than concentrated management. This tendency persists in band reservation for delivering multimedia data. This means that it is not the resource allocation-type protocol RSVP (R. Braden et al., "Resource ReSerVation Protocol (RSVP) - Version 1 Functional Specification", RFC 2205, Internet Engineering Taskforce, Sep. 1997) that is mainstream but rather the priority control-type protocol DiffServ (S. Blake et al., "An Architecture for Differentiated Services", RFC 2475, Internet Engineering Taskforce, Dec. 1998). The nature of DiffServ results in minor packet loss, however, DiffServ does not provide a scheme for gently changing (deteriorating) the image quality of the media to counter this packet loss (second problem).

Accordingly, the technology of VOIP (Voice Over Internet Protocol) was conceived for use with internet telephony, for example, where packets from a plurality of senders are sent through relay routers and moreover must be in real-time. In the case of such bi-directional audio communication, if the propagation delay time exceeds a fixed value (for example 100 ms) user satisfaction with the quality of the product decreases, and therefore a certain propagation delay time is designated as a required specification. If the designated propagation delay time is exceeded, those packets are discarded because the receiving device cannot use them. That is, the relay of such packets is meaningless. However, current relay routers relay packets which exceed the designated value of the propagation delay time and packets which do not exceed that value in the same way, and as a result perform unnecessary processes (third problem).

RTP (Real Time Transport Protocol) is known as a protocol for transmitting multimedia data over the Internet in real-time (H. Schulzrinne et al., "RTP: A Transport Protocol for Real-Time Applications", RFC 1889, Internet Engineering Taskforce, Jan. 1996). A technology in which error correction capabilities are added to this RTP is also known (J. Rosenberg et al., "An RTP Payload Format for Generic Forward Error Correction", RFC 2733, Internet Engineering Taskforce, Dec. 1999). With this RFC 2733 format, the length of FEC (Forward Error Correction) data, that is, redundant information (error correction information) for forward error correction, is the same as the length of the media data, and the length of FEC data is both long and fixed, which results in the problem of a delayed start to error correction and the inability to flexibly handle various types of media data lengths (fourth problem).

### DISCLOSURE OF THE INVENTION

It is an object of the present invention to solve the aforementioned problems.

To solve the first problem, a first data transmission method according to the present invention is applied which includes a step of fragmenting a data sequence obtained as encoded video or audio based on any of the time of the video or audio, a space in the video, the quality of the video or audio, and information given by the creator of the video or audio, or a combination thereof, and a step of executing an encryption process on only a portion of such fragmented data sequences.

To solve the second problem, a second data transmission method according to the present invention is applied which includes a step of fragmenting a data sequence obtained as encoded video or audio based on any of the time of the video or audio, a space in the video, the quality of the video or audio, and information given by the creator of the video or audio, or a combination thereof, and a step of executing an error correction encoding process on only a portion of such fragmented data sequences.

When the first or second data transmission methods are used, a first data relay method which includes a step of sorting the fragmented data sequences, only a portion of which have undergone at least one of the encryption process and the error correction encoding process, in a data relay device, and a step of allocating the fragmented data sequences to any of a plurality of queues based on the results of this sorting, and the frequency of the relay process differs for each queue, or the method for selecting the queue for retrieving data during the relay process is changeable, or the method for disposing data which cannot be fully processed differs for each queue.

To solve the third problem, a second data relay method according to the present invention is used, the method including a step in which data to which a maximum value for a propagation delay time determined by the requirement specifications of an application has been added are received from a plurality of sending devices, and a step in which of the data from the plurality of sending devices, and the data with the smallest added maximum value for the propagation delay time are relayed with priority.

To solve the fourth problem, a third data transmission method according to the present invention is used in which data are fragmented into packets and transmitted by a sending device, the data transmission method including a first step in which the sending device refragments the packets to generate sub-fragmented packets, and a second step in which the sending device generates and then transmits error correction packets from at least a single sub-fragmented packet.

### BRIEF DESCRIPTION OF THE DRAWINGS

Fig. **1** is a block diagram showing the configuration of the data transmission device according to a first embodiment of the present invention.
Fig. **2** shows an example of how the fragmenting portion in Fig. **1** operates.
Fig. **3** is a flow chart showing an example of how the sending device in Fig. **1** operates.
Fig. **4** is a flow chart showing an example of how the receiving device in Fig. **1** operates.
Fig. **5** is a block diagram showing the configuration of the data transmission device according to a second embodiment of the present invention.
Fig. **6** shows an example of how the fragmenting portion in Fig. **5** operates when handling video data.
Fig. **7** shows an example of how the sending portion in Fig. **5** operates when handling audio data.
Fig. **8** shows an example of how the sending portion in Fig. **5** operates when handling both video data and audio data.
Fig. **9** is a block diagram showing the configuration of the data transmission device according to a third embodiment of the present invention.
Fig. **10** is a block diagram showing the configuration of the data transmission system including a data relay device according to a fourth embodiment of the present invention.
Fig. **11** is a conceptual diagram for describing the data relay method according to a fifth embodiment of the present invention.
Fig. **12** is a flow chart illustrating how the routers (data relay devices) in Fig. **11** record to the queues.
Fig. **13** is a flow chart illustrating how the routers (data relay devices) in Fig. **11** bschedule delivery of the IP packets.
Fig. **14** is a conceptual diagram for describing the data relay method according to a sixth embodiment of the present invention.
Fig. **15** is a flow chart illustrating how specific routers (data relay devices) in Fig. **14** measure the propagation delay time.
Fig. **16** is a flow chart illustrating how the same routers (data relay devices) in Fig. **14** schedule delivery.
Fig. **17** is a block diagram showing an example of the configuration of a sending device for achieving the data transmission method according to a seventh embodiment of the present invention.
Fig. **18** is a diagram for explaining an example of the operation of the refragmenting portion and the FEC calculating portion in Fig. **17.**
Fig. **19** is a diagram for explaining an example of how the packetizing portion in Fig. **17** operates.
Fig. **20** is a flow chart illustrating an example of how the sending device of Fig. **17** operates.
Fig. **21(a)** depicts the transmission of data using conventional art, and Fig. **21(b)** depicts the transmission of data according to a seventh embodiment of the present invention.
Fig. **22** is a block diagram showing an example of the configuration of a receiving device for achieving the data transmission method according to an eighth embodiment of the present invention.
Fig. **23** is a block diagram showing an example of the configuration of a receiving device for achieving the data transmission method according to a ninth embodiment of the present invention.
Fig. **24** is a diagram for illustrating the effect of the data transmission method according to the present embodiment.
Fig. **25** is a block diagram showing an example of the configuration of a sending device and a receiving device for achieving the data transmission method according to a tenth embodiment of the present invention.

### BEST MODE FOR CARRYING OUT THE INVENTION

### First Embodiment

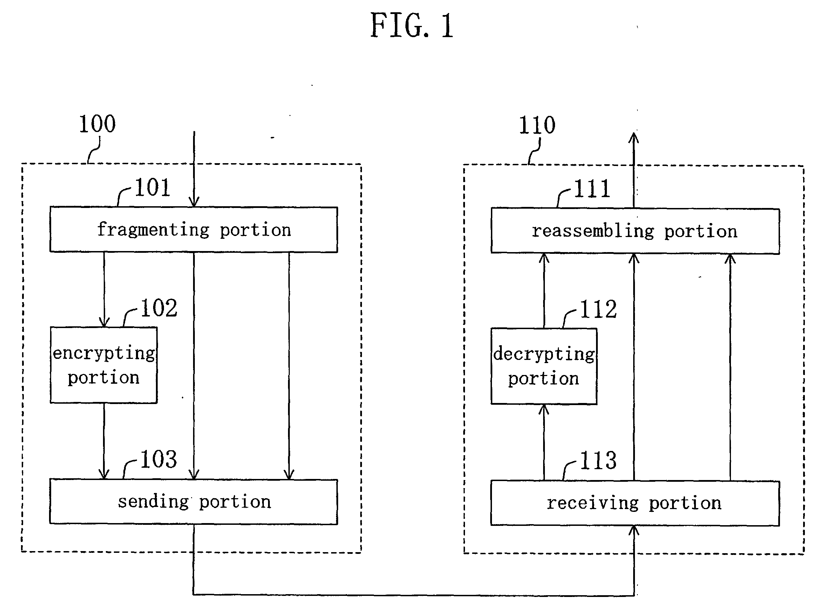

Fig. **1** shows the configuration of a data transmission device according to a first embodiment of the present invention. In the present embodiment, MPEG-1 (ISO/IEC 13818-2) of the various MPEG (Moving Picture Coding Experts Group) standards is used as the format for encoding video, and IPv6 is used as the format for video transmission. In Fig. **1,** a sending device **100,** which takes bit streams of encoded video as input and transmits them, includes a fragmenting portion **101,** an encrypting portion **102,** and a sending portion **103.** A receiving device **110,** which takes packets from the sending device **100** as input and outputs bit streams, includes a receiving portion **113**, a decrypting portion **112**, and a reassembling portion **111**.

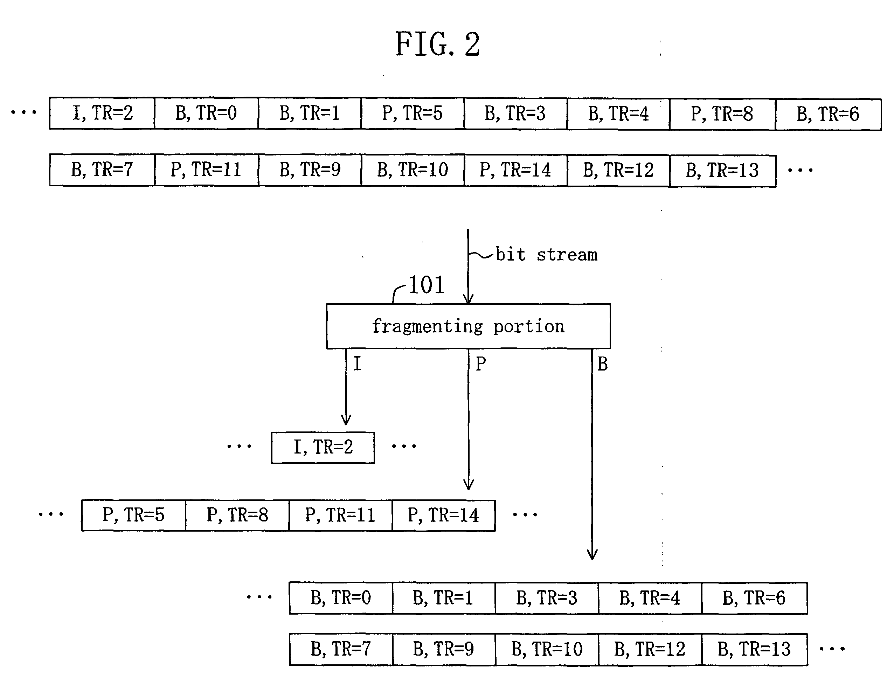

Fig. **2** shows an example of how the fragmenting portion **101** in Fig. **1** operates. The fragmenting portion **101** fragments a bit stream of video based on the playback time of the decoded video of that bit stream. MPEG-1 is divided into I (Intra) frames, P (Predictive) frames, and B (Bidirectionally predictive) frames. Ordinarily, in a single GOP (Group Of Pictures) there are 15 frames and the interval between I or P frames is three frames. Fragmenting and extracting bit streams corresponding to I, P, and B frames makes fragmentation based on the playback time possible. Fragmentation and extraction can be easily achieved by searching for the 32-bit PSC (Picture Start Code) marking the start of the picture layer in the bit stream and then viewing the PCT (Picture Coding Type) that follows. The temporal reference (TR) shown in Fig. **2** is the value indicating the relative time of the frames in a particular GOP.

The encrypting portion **102** in the sending device **100** in Fig. **1** encrypts only the port furthest left (that is, the port with which the bit stream corresponding to the I frames is transmitted). In IPv6, the output from the fragmenting portion **101** is allocated to TCP (Transmission Control. Protocol) or UDP (User Datagram Protocol) ports, and is set so that in the IP layer only the port with which the bit stream corresponding to the I frames is transmitted undergoes IPsec processing (see R. Thayer et al., "IP security Document Roadmap", RFC 2411, Internet Engineering Taskforce, Nov. 1998, and S. Kent et al., "IP Encapsulating Security Payload (ESP)", RFC 2406, Internet Engineering Taskforce, Nov. 1998). That is, the encrypting portion **102** and the sending portion **103** are made up of a TCP or UDP layer, an IP layer, a data link layer, and a physical layer.

In the receiving device **110,** the receiving portion **113** receives the packets for each port output by the sending device **100**. Packets from the port where bit streams corresponding to I frames are transmitted are processed by the decrypting portion **112** and restored to their original packets. The receiving portion **113** and the decrypting portion **112** are made up of a TCP or UDP layer, an IP layer, a data link layer, and a physical layer. The reassembling portion **111** takes in packets from the receiving portion **113** and the decrypting portion **112** and restores them to the original bit stream. This restoring takes place with the packets lined up in increasing order of TR value.

With the above configuration, bit streams of encoded video are fragmented by the fragmenting portion **101** and only a portion of the fragmented packets are encrypted by the encrypting portion **102**, so only a portion of the packets require decryption in the receiving device **110.** As a result, the time needed for decryption in the receiving device **110** can be reduced and the first conventional problem can be solved. Moreover, video encoding by nature is such that unless the I frames can be restored, the subsequent video cannot be restored, and thus the object of permitting only persons with the key for deciphering the encryption to view the video is not compromised.

It should be noted that in the present embodiment only the I frames are encrypted, however, the number of ports to be encrypted can be increased or decreased to match the capabilities of the CPU (Central Processing Unit) of the sending device **100**. It is also possible that only a portion of the I frames are decrypted in the receiving device **110** in accordance with the capabilities of the CPU, in which case the video cannot be reproduced at the full frame rate (30 frames per second), however, the video can be obtained at a capacity processable by the capabilities of the CPU.

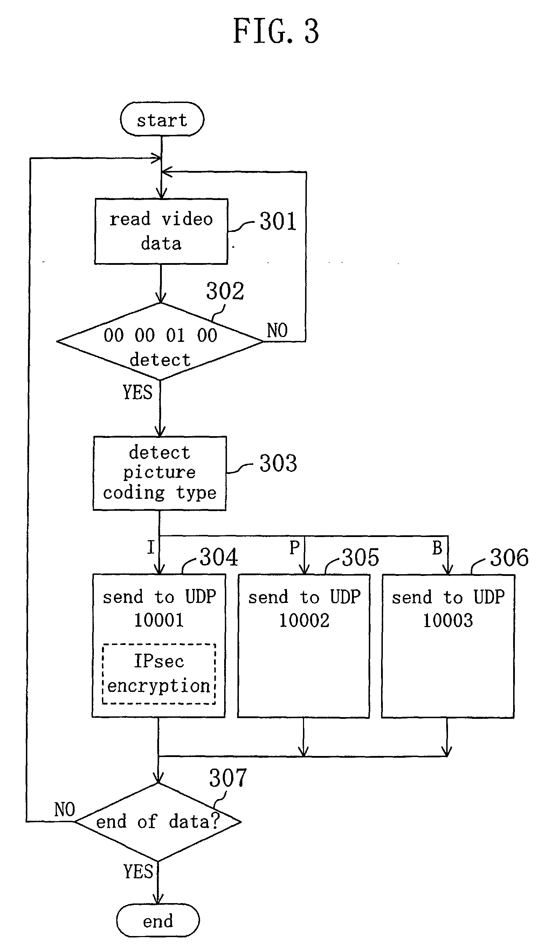

Fig. **3** shows an example of how the sending device **100** in Fig. **1** operates. According to Fig. **3,** first the video data are read out (step 301) and the byte sequence 0×00, 0 ×00, 0×01, 0×00 indicating the picture start code (PSC) is detected (step 302). If the PSC is detected, then the picture coding type (PCT) is extracted (step 303). Then, for each value of the PCT, the operation branches to step 304 in case of an I frame, to step 305 in case of a P frame, and to step 306 in case of a B frame. In steps 304, 305, and 306 packets are generated and transmitted to the ports. At this time the packets are assigned a unique sequence number. In step 304, IPsec encryption is also performed on the packets. Then, in step 307, it is confirmed whether the end of the data has been reached, and if not, the procedure returns to step 301.

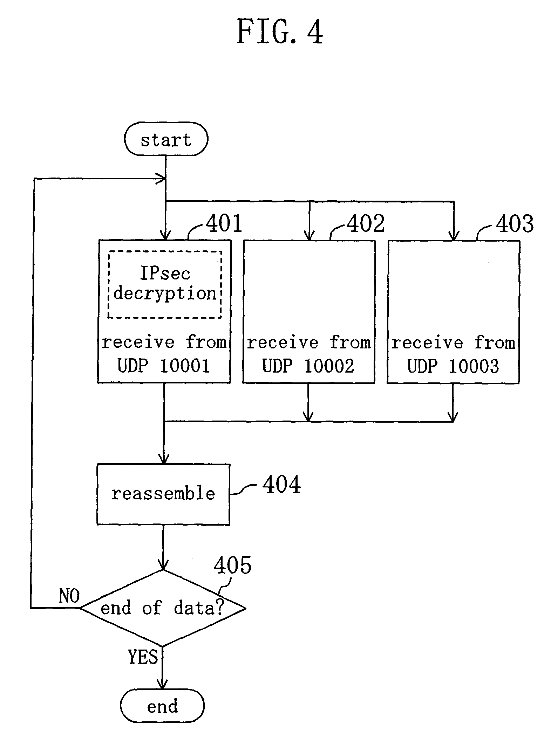

Fig. **4** shows an example of how the receiving device **110** in Fig. **1** operates. According to Fig. **4,** packets from the UDP ports are received in steps 401, 402, and 403. In step 401, an IPsec decryption process is performed on the packets. In step 404, the data sequence is extracted from the packets and the data are reassembled by linking them in the order of their sequence number. The reassembled data are then transmitted to a higher layer. Next, in step 405, it is confirmed whether the end of the data has been reached, and if not, the procedure returns to the branching point of steps 401, 402, and 403.

### Second Embodiment

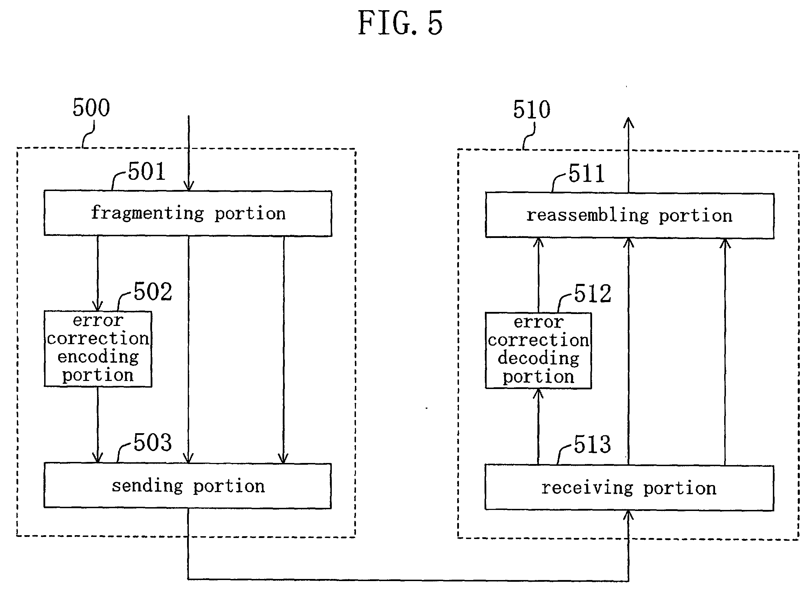

Fig. **5** shows the configuration of a data transmission device according to a second embodiment of the present invention. In Fig. **5**, numeral **500** denotes a sending device for taking a bit stream of encoded video as input and transmitting it. Numeral **510** denotes a receiving device for taking packets from the sending device **500** as input and thew outputting a bit stream. A fragmenting portion **501,** a sending portion **503,** a reassembling portion **511,** and a receiving portion **513** are the same as those described in the first embodiment. Numeral **502** denotes an error correction encoding portion, and numeral **512** denotes an error correction decoding portion. According to Fig. **5**, bit streams of encoded video are fragmented by the fragmenting portion **501**, and error correction encoding is performed by the error correction encoding portion **502** to only a portion of the fragmented packets, i.e. only the packets related to the I frames. The RFC 2733 format for example can be applied as the format for error correction encoding. More specifically, in the sending portion **503**, the fragmented data sequences are each transmitted with different UDP port numbers or different RTP payload types. The FEC data are transmitted as a separate RTP payload.

With the above configuration, the I frames are guaranteed to be restored when errors occur at below the correctable error rate. That is, if error correction encoding is not performed, then decoding fails when an error occurs even at only one location, however, with the present embodiment the I frames can be restored even if all of the P frames and B frames are missing. Although in this case the frame rate drops (to a minimum of 2 frames per second), at least video decoding is possible, and the picture quality of the media changes gently. This means that the second conventional problem can be solved.

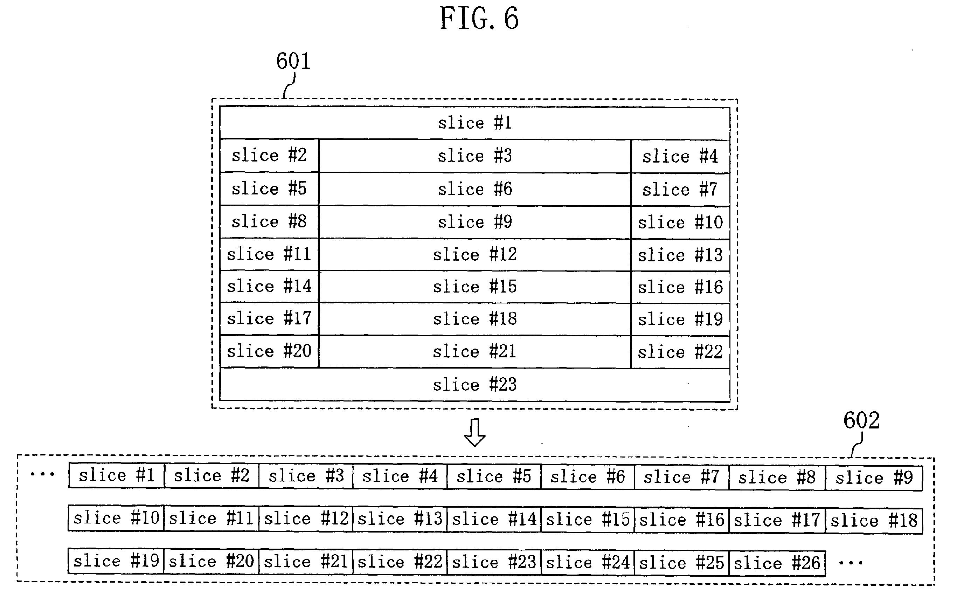

Fig. **6** shows another example of how the fragmenting portion **501** in Fig. **5** operates when handling video data. In the above example fragmentation was performed based on time, but it is also possible to perform fragmentation based on space. For example, the top and bottom peripheries and the left and right peripheries are fragmented using a slice structure, as shown in Fig. **6**. In Fig. **6**, numeral **601** denotes an example of a fragmented screen in which the top and bottom peripheries are made up of the two slices #1 and #23. The left periphery is made up of the seven slices of #2, 5, 8, 11, 14, 17, and 20, and the right periphery is also made up of seven slices, these are the slices #4, 7, 10, 13, 16, 19, 22. Numeral **602** is a bit stream in which the slices are lined up by number.

In this case, the fragmenting portion **501** extracts the seven slices #3, 6, 9, 12, 15, and 21 for the frames of the center portion, and outputs these slices to the error correction encoding portion **502**. By doing this, errors can be corrected in the center portion if errors occur at or below a fixed value. This means that a configuration can be attained, in which picture quality does not easily deteriorate in the central portion, which is where deteriorations in picture quality of the video are easily drawn to the attention of the viewer. It should be noted that it is also possible for the fragmenting portion **101** in Fig. **1** of the first embodiment to perform a fragmentation based on Fig. **6**.

It is also possible for the fragmenting portion **501** to perform fragmentation based on picture quality, in which case portions of the encoded results of the DCT (Discrete Cosine Transform) coefficients in the macro blocks can be fragmented into low frequency components and high frequency components. Thus, errors in the low frequency components can be corrected if the errors are at or below a fixed value. This means a device can be provided in which the decoding does not immediately fail when errors occur, and a reasonable image, although with a low S/N, can be decoded in the case of errors at or below a fixed value. It should be noted that it is also possible for the fragmenting portion **101** in Fig. **1** of the first embodiment to perform this same fragmentation based on picture quality.

Furthermore, the fragmenting portion **501** can perform fragmentation based on information given by the creator of the video. Here, "information given by the creator of the video" means the time period the video is broadcast, the video genre, the cast in the video, commercial segments of the video, parameters set by the creator, or a combination thereof. For example, a correlation can be drawn between information indicating the cast and the bit stream of the encoded video. The information indicating the cast can be recorded at each GOP. Then, only the GOPs in which certain cast members appear can be extracted and allocated to the port that passes through the error correction encoding portion **502,** and all other GOPs can be allocated to different ports. Thus, it is possible to receive only the video images in which specific cast members appear as crisp video that is errorless even in an environment where there is some error. Specific cast members can be selected based on the receiver's profile, or can be selected on demand by the receiving device **510**. It should be noted that it is also possible for the fragmenting portion **101** in Fig. **1** of the first embodiment to perform the same fragmentation based on information given by the creator of the video.

The above first and second embodiments were described using video, however, the present invention is also suited for audio. For example, the relationship between the initial value and the differential in ADPCM (Adaptive Differential Pulse Code Modulation) encoding, for example, is similar to the relationship between the I frames and the P and B frames in video. Accordingly, the section corresponding to the initial value can be fragmented and extracted, and then allocated to the port passing through the encrypting portion **102** or the error correction encoding portion **502**.

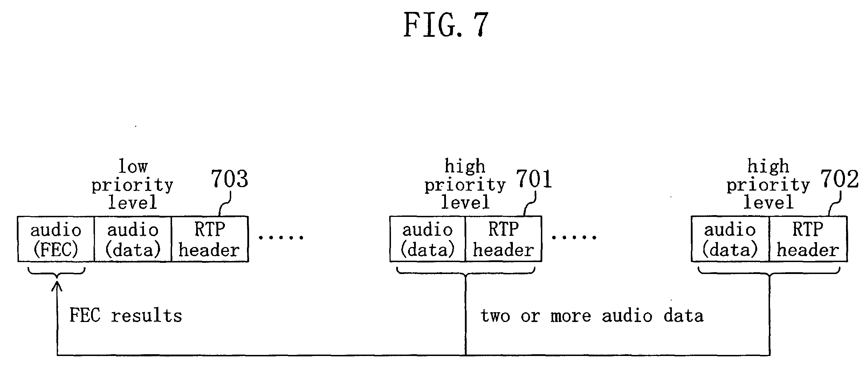

Fig. **7** illustrates an example of how the transmitting portion **503** of Fig. **5** operates when handling audio data. As shown in Fig. **7**, FEC data (error correction information) is generated from two or more audio data packets **701** and **702** of a high priority level, another audio data packet **703** integrating the FEC data and audio data of a low priority level is generated, and these packets are then transmitted.

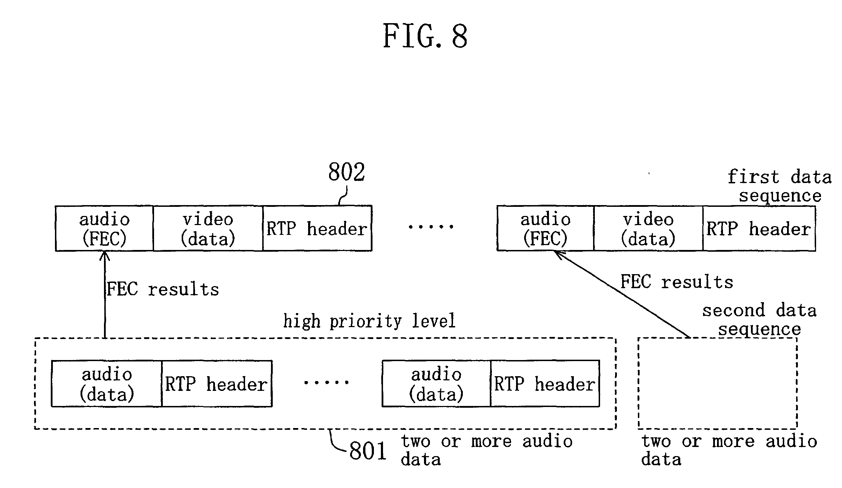

Fig. **8** illustrates an example of how the transmitting portion **503** in Fig. **5** operates when handling both video data and audio data. As shown in Fig. **8**, a first data sequence includes video data having a low priority level, and a second data sequence includes audio data having a high priority level. From here, FEC data (error correction information) is generated from two or more audio data packets **801**, a video data packet **802** is generated incorporating that FEC data and video data, and then these packets are transmitted. That is, when the configuration shown in Fig. **5** is provided for each of the first and second data sequences, and the data sequences are transmitted, a single packet incorporating the FEC data of the audio and the fragmented data sequence of the video is generated and transmitted.

### Third Embodiment

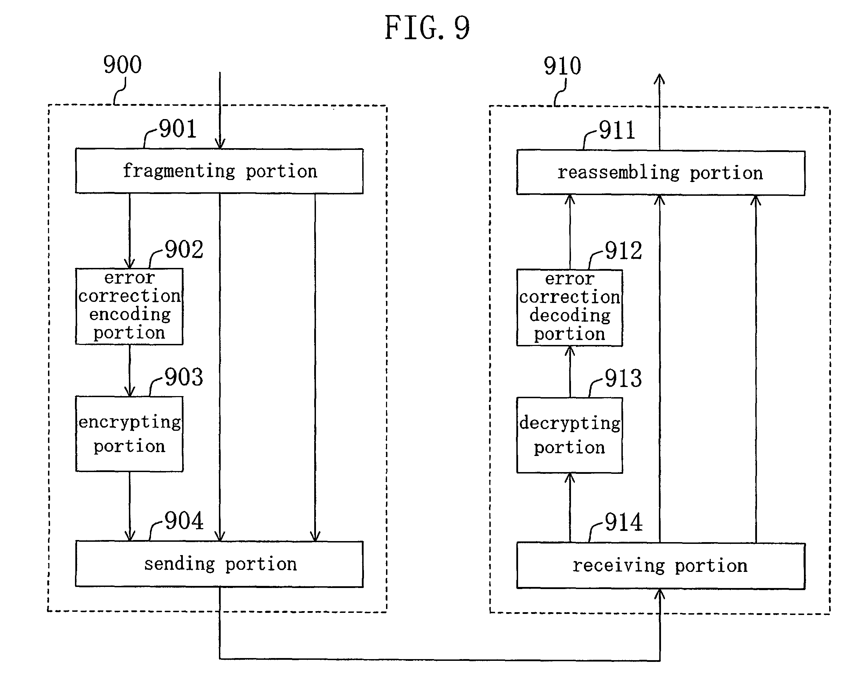

Fig. **9** depicts the configuration of the data transmission device according to a third embodiment of the present invention. The present embodiment is a combination of the first embodiment (or its modified examples) and the second embodiment (or its modified examples). In Fig. **9,** numeral **900** denotes a sending device for taking a bit stream of encoded video as input and transmitting it. Numeral **910** denotes a receiving device for taking in packets from the sending device **900** as input and outputting a bit stream. A fragmenting portion **901,** an encrypting portion **903,** a transmitting portion **904,** a reassembling portion **911,** a decrypting portion **913,** and a receiving portion **914** are equivalent to those described in the first embodiment. An error correction encoding portion **902** and an error correction decoding portion **912** are equivalent to those described in the second embodiment.

With the above configuration, the bit stream of encoded video is fragmented by the fragmenting portion **901** and the error correction encoding portion **902** performs error correction encoding only on a portion of the fragmented packets. Furthermore, encryption is performed with the encrypting portion **903** only on a portion of the fragmented packets, and thus the first and second conventional problems are solved simultaneously.

In the example of the present embodiment, encryption and error correction encoding are performed on the I frames only, however, other combinations can also be used. For example, error correction encoding can be performed on the I and P frames and encryption performed on the I frames only.

### Fourth Embodiment

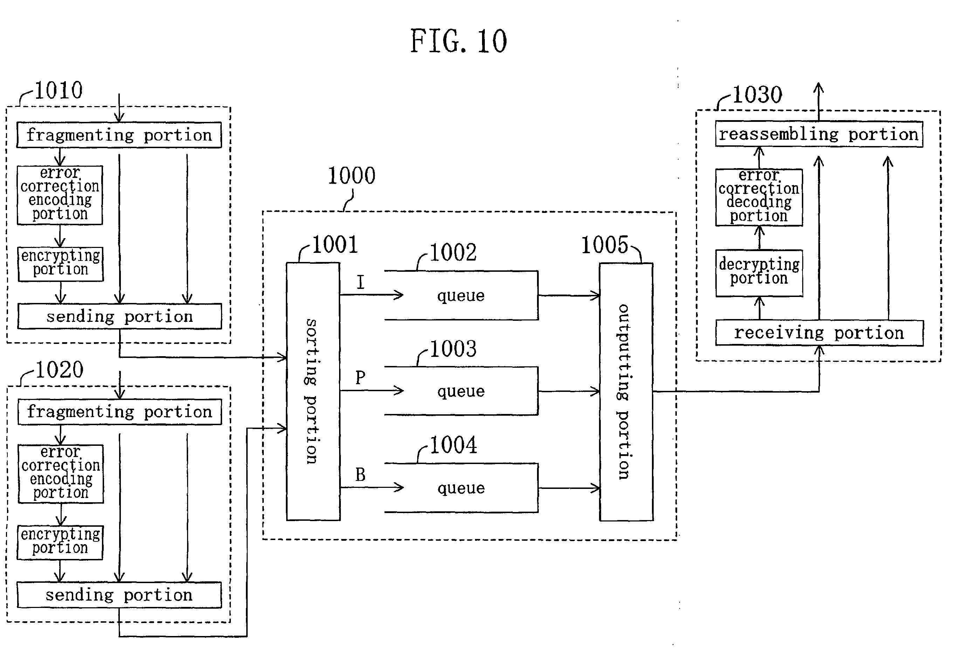

Fig. **10** shows the configuration of a data transmission system including a data relay device **1000** according to a fourth embodiment of the present invention. In the first through third embodiments, an encryption process and/or an error correction encoding process was performed on a portion of the data sequence, however, effective results cannot be obtained by relaying processed data and non-processed data in the same way without making a distinction between the two. That is, it can be expected that essential data that has been encrypted and data that has been error correction encoded will be more reliably delivered than other data. For example, in the case of data that have been error correction encoded, there can be as much packet loss as the maximum capacity loss rate that is ensured by error correction encoding, and thus there is a demand for a relay process that takes this point into account. The present embodiment meets this demand.

In Fig. **10**, numerals **1010** and **1020** denote sending devices as described in the first through third embodiments (or their modified examples), and numeral **1030** denotes a receiving device as described in the first through third embodiments (or their modified examples). The bit stream fragments corresponding to the I, P, and B frames are allocated to the UDP ports **10001, 10002,** and **10003,** respectively.

The data relay device **1000** is provided with a sorting portion **1001**, a queue **1002** for the I frames, a queue **1003** for the P frames, a queue **1004** for the B frames, and an outputting portion **1005**. The sorting portion **1001** receives packets from the sending devices **1010** and **1020**, sorts the packets depending on their UDP port number, and then inserts the results into the queues **1002, 1003, and 1004.** That is, packets with a UDP port number of **10001, 10002,** and **10003** are inserted into the queues **1002, 1003,** and **1004,** respectively. The outputting portion **1005** processes each queue at a different rate or with a different selection method for each queue, or has a different packet disposal method for each queue for when the queues are nearly full. For example, the outputting portion **1005** performs priority queuing to the queue **1002** for I frames when there is data in the queue **1002** for I frames, even if there is data in the other queues **1003** and **1004**. This changes the selection method of the queues. As another example, it is also possible that the processing capability of the data relay device **1000** is distributed evenly (Fair Queuing) based on the amount of data in the queues, or that it is distributed evenly, but a slight priority (Weighted Fair Queuing) is given to processing the queue **1002** for I frames. Thus, it is possible to change how often each queue is processed. The disposal probability can also be given as a function of the average amount of data accumulated in the queues (average queue length).

Data easily accumulates in the queue **1002** for I frames when the disposal probability of the queue **1002** for I frames is smaller than the disposal probability of the other queues **1003** and **1004**, which easily causes large delays in the bit stream fragments of the I frames corresponding to that port. To avoid this problem, it is possible to make the disposal probability of the queue **1002** for I frames larger than the disposal probability of the other queues **1003** and **1004**. This, however, poses a problem in that packet disposal easily occurs with I frames. To solve this problem, a stronger error correction encoding format can be adopted.

With the above configuration, data corresponding to the frames that have been fragmented in the sending devices **1010** and **1020** are once again sorted by the sorting portion **1001,** the results of this sorting are inserted into the queues **1002**, **1003**, and **1004**, and the outputting portion **1005** performs different relay processes for each queue. Thus, the data can be distinguished from one another and relayed.

It should be noted that it is also possible to correlate the methods of disposing packets with the outputting portion **1005** and the packet loss rate detected by the sending device **1030** when implementing a RTP control protocol (RTCP), for example. This means that to further reduce the current loss rate, the port in question is reallocated to the queue with the lowest disposal probability.

Additionally, it is also possible to correlate the error correction encoding format applied to a specific port and the disposal probability of the queue allocated to that port. This means that an error correction format capable of correcting packet loss determined from the disposal probability of the queue is adopted. Thus, it is possible to provide a route without equivalent packet loss even in a relay route with packet loss.

In the above description, the sorting portion **1001** sorts the packets by their UDP number, however, it is also possible for it to instead sort the packets using the TOS field of IPv4 (Internet Protocol Version 4), the IPv6 traffic class, or the IPv6 flow label, for example.

The present invention also includes programs for executing all or a portion of the steps of the above described data transmission methods or data relay methods according to the first to fourth embodiments using a computer.

### Fifth Embodiment

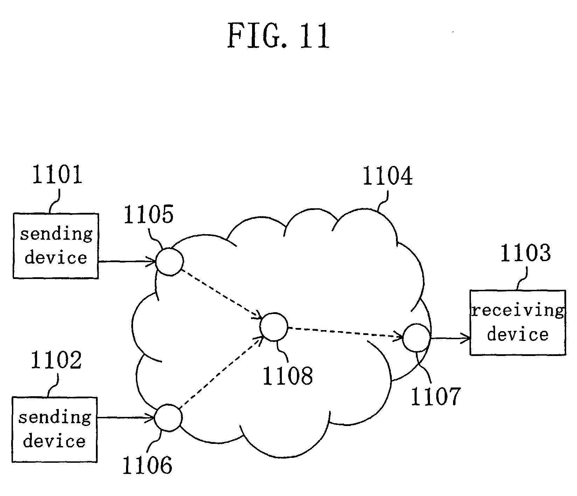

Fig. **11** is a conceptual diagram for describing the data relay method according to a fifth embodiment of the present invention. Referring to Fig. **11,** the following is an explanation using DiffServ as the scheme for implementing priority processing with the relay routers (data relay devices).

In Fig. **11,** numerals **1101** and **1102** denote sending devices and numeral **1103** denotes a receiving device. Numeral **1104** is a network called a DS domain and internally performs high-speed relay processing looking at only the DS field (top 6 bits of the TOS field) in the header portion of IP packets. Numerals **1105** and **1106** are first and second routers, which in DiffServ are called ingress nodes. These first and second routers **1105** and **1106** assign priority levels to the packets. Assigning priority levels is performed by sorting incoming packets by:
IP address (source address, destination address)
protocol number
TCP/UDP port number
and for each category assigning a different value to the DS field. It should be noted that priority levels are ordinarily assigned based on predetermined policies (such as giving audio top priority). It is also possible for the sending devices **1101** and **1102** to correlate the priority level and port number of the data and change the value of the DS field based on the port number. Additionally, it is also possible for the sending devices **1101** and **1102** to set the DS field value based on the priority level. Numeral **1107** denotes a third router, which in DiffServ is called an egress node. The third router **1107** erases the value of the DS field. Numeral **1108** denotes a fourth router for receiving IP packets from the sending devices **1101** and **1102** and relaying them according to their priority level.

The sending devices **1101** and **1102** add to the header of an IP packet the maximum value for the propagation delay time set by the requirement specifications of an application. A scheme for extended headers can be used for this adding method in the case of IPv6, for example. The field added to the header is called the propagation delay field and is assigned the maximum value for the propagation delay time. In the case of VOIP, this value can be assigned given the fact that the delay time between when a person perceives voice and senses unnaturalness about it is approximately 100 to 200 ms or more. When relaying an IP packet, the first router **1105** takes the time an IP packet is present in the first router **1105** during the relay of that IP packet and subtracts it from the value of the propagation delay field, and writes the result into the propagation delay field. The second router **1106** does the same. The fourth router **1108** holds the IP packets from the first and second routers **1105** and **1106** in their respective queues while delivering them to the third router **1107**, and those with a small propagation delay field value are delivered with priority.

The relay process according to the present embodiment is made up of a procedure for recording to the queues and a procedure for scheduling. The two procedures are carried out as independent processes.

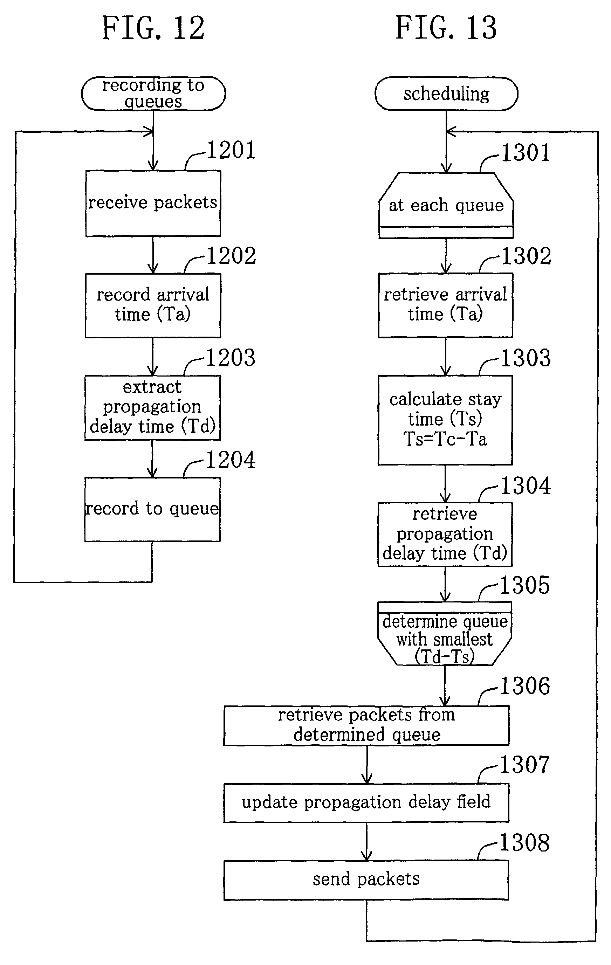

Fig. **12** illustrates how the routers in Fig. **11** record to the queues. First, in step **1201** a packet is received, and the time it is received is recorded as the arrival time Ta (step 1202). Next, the propagation delay time Td is extracted from the propagation delay field of the received packet (step 1203). Then, both Ta and Td are recorded together with the received packet in a queue (step 1204). The queue here is selected based on the DS field value. The above process is repeated.

Fig. **13** illustrates how the routers in Fig. **11** schedule delivery of the IP packets. Steps 1301 to 1305 are a loop process, in which steps 1302 to 1304 are performed on packets at the head of each of the queues. In step 1302, the arrival time Ta is taken, and in step 1303 the arrival time Ta is subtracted from the current time Tc to determine the stay time Ts. Next, in step 1304, the propagation delay time Td is taken, and in step 1305 the queue for which (Td - Ts) is the smallest is determined. To send the packet at the head of the queue determined in this way, the packet is taken from the queue in step 1306. Then, the packet is sent in step 1308, but before that the propagation delay field is updated in step 1307. That is, the (Td-Ts) determined earlier is written into the propagation delay field. The process of the above steps 1301 to 1308 is repeated.

With the above configuration, according to the present embodiment, if for example the propagation delay field values of IP packets from the first and second routers **1105** and **1106** are both 200 ms, the stay time in the first router **1105** is 180 ms, and the stay time in the second router **1106** is 50 ms, then the propagation delay field value of the IP packet from the first router **1105** is 20 ms and the propagation delay field value of the IP packet from the second router **1106** is 150 ms. In the conventional process, the final propagation delay time when the IP packet from the first router **1105** arrives at the receiving device **1103** is larger than that of the IP packet from the second router **1106**, and as a result the IP packet from the first router **1105** does not fulfill the requirement specification of the application and is of no use to receive. With the present embodiment, however, the propagation delay field value of the IP packet from the first router **1105** is smaller than that of the IP packet from the second router **1106**, and therefore the IP packet from the first router **1105** is prioritized in being relayed. The result is an increased probability that the requirement specification of the application will be met and the third conventional problem can be solved.

It should be noted that the present embodiment does not take into account the relay time between routers, so exact values are not expressed in the propagation delay field. To solve this problem, all of the routers **1105, 1106, 1107,** and **1108,** the sending devices **1101** and **1102,** and the receiving device **1103** can each be given synchronized clocks and the sending devices **1101** and **1102** can attach the transmission time of the IP packets in addition to the earlier mentioned propagation delay field when sending. Then, the propagation delay time τd of the IP packets from their transmission time to the current time is determined with the routers **1105, 1106, 1107,** and **1108.** τ d is determined by subtracting the transmission time (which has been added to the IP packets) from the current time. Then, subtracting τd from the propagation delay field value Td, the propagation delay time that remains (remaining propagation delay time) τr, that is, the value indicating how many more propagation delays can be permitted is determined. The IP packets are then processed in order from the smallest remaining propagation delay time τr. The above configuration makes it possible to alter the order of the relay process by using the τr value, which is more accurate than the above (Td-Ts) value.

### Sixth Embodiment

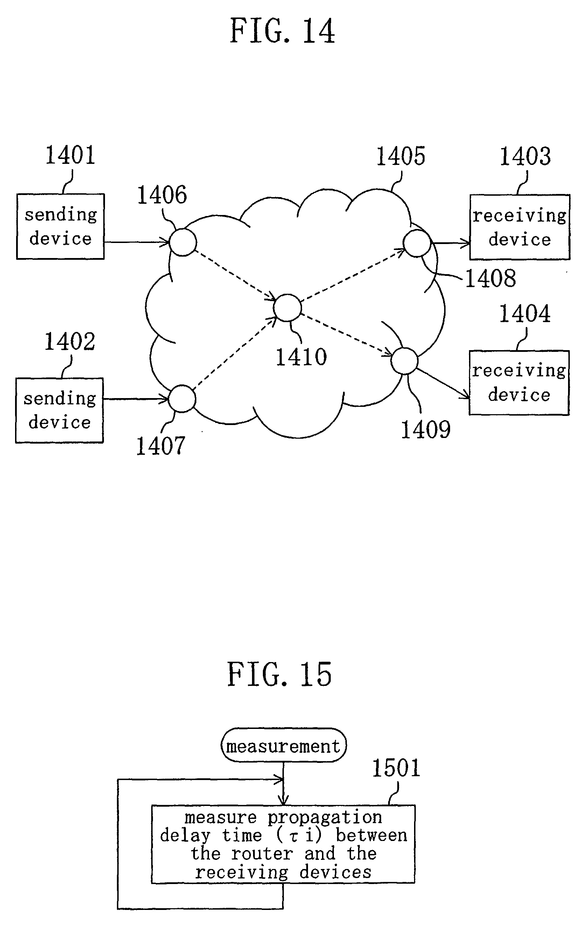

Fig. **14** is a conceptual diagram for describing a data relay method according to a sixth embodiment of the present invention. In Fig. **14**, sending devices **1401** and **1402**, receiving devices **1403** and **1404**, a network **1405**, and routers **1406**, **1407**, **1408**, and **1409** are equivalent to those described in the fifth embodiment. In the present embodiment, however, the propagation delay time from a router to the receiving devices is taken into consideration.

Fig. **15** shows how the propagation delay time is measured in a specific router **1410** in Fig. **14.** The router **1410** periodically measures the propagation delay time τi between itself and the receiving devices **1403** and **1404** (step 1501). The measurement is made possible by the use of ICMP (Internet Control Message Protocol) in the IP layer.

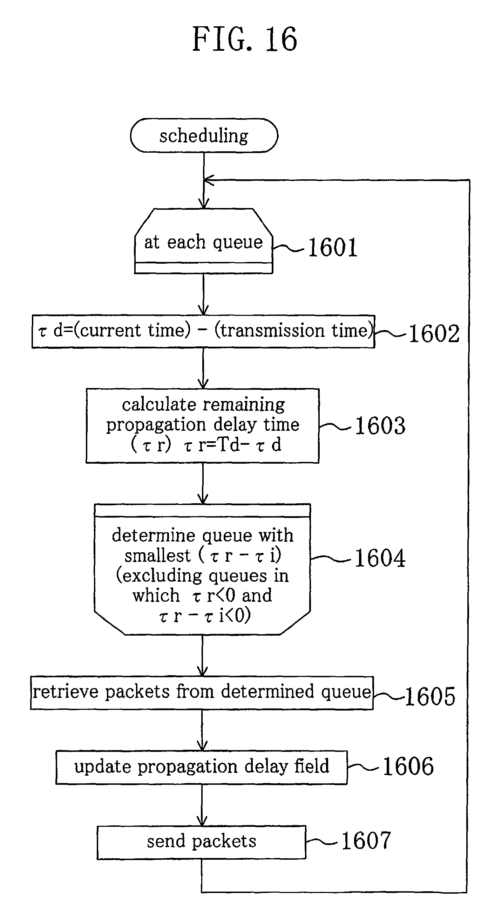

Fig. **16** illustrates how the same router **1410** in Fig. **14** schedules the delivery process. Steps 1601 to 1604 are a loop process, in which steps 1602 to 1603 are performed at each queue on packets at the head of the queue. In step 1602, the transmission time (which has been added to the IP packets) is subtracted from the current time to determine the propagation delay time τ d of the time from transmission to the present time. In step 1603, τd is subtracted from the propagation delay field value Td to determine the remaining propagation delay time τr. Then, in step 1604, the queue with the smallest ( τr-τi) is determined. However, queues in which τr<0 (or Td-τi<0) and queues in which τr-τi<0 are not included so as to omit useless relays. To send the header packet of the queue determined in this way, the packet is taken from the queue in step 1605. Then, the packet is transmitted in step 1607, but before that its propagation delay field is updated in step 1606. The procedure of the above steps 1601 to 1607 is repeated.

With the above configuration, at each IP packet the propagation delay time τi from the remaining propagation delay time τr to the corresponding receiving device is subtracted and the IP packets are processed in the order of the smallest resulting value. Thus, there is an even higher probability that the propagation delay time actually required is smaller than the propagation delay time required by the application.

### Seventh Embodiment

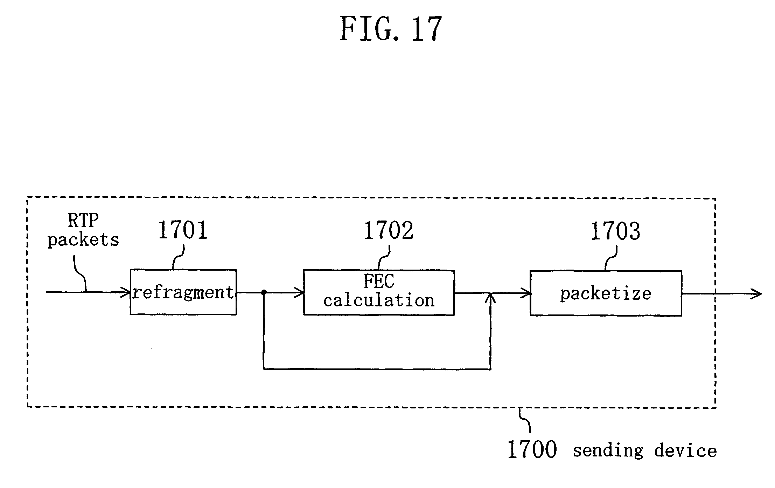

Fig. **17** shows an example of the configuration of a sending device **1700** for achieving the data transmission method according to a seventh embodiment of the present invention. In Fig. **17**, numeral **1701** denotes a refragmenting portion, **1702** denotes an FEC calculating portion, and **1703** denotes a packetizing portion. The refragmenting portion **1701** fragments inputted RTP packets into a fixed length. The FEC calculating portion **1702** calculates FEC data from the fragmented data. The packetizing portion **1703** reassembles the RTP packets.

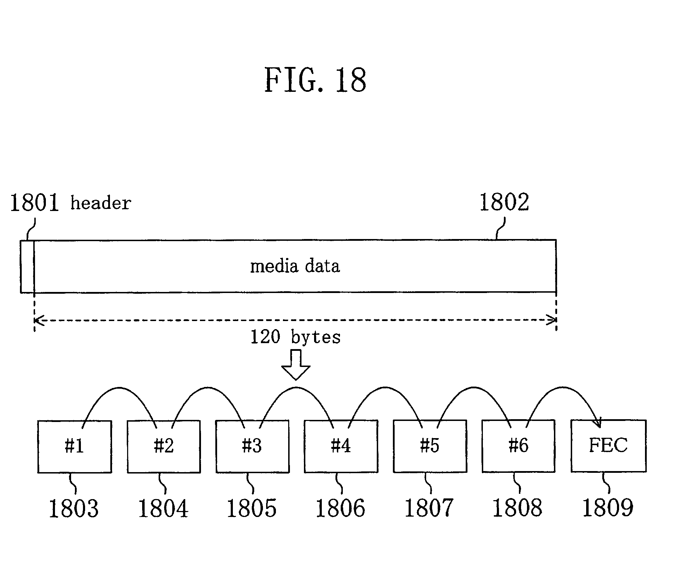

Fig. **18** shows an example of how the refragmenting portion **1701** and the FEC calculating portion **1702** in Fig. **17** operate. In Fig. **18**, numeral **1801** indicates the header of an RTP packet inputted to the refragmenting portion **1701** and numeral **1802** indicates media data of the same RTP packet. The length of the media data **1802** in this example is **120** bytes. Numerals **1803**, **1804**, **1805**, **1806**, **1807**, and **1808** indicate six media data packets fragmented by the refragmenting portion **1701**, and the fragmented media data packets are each of a 20 bytes length. The FEC calculating portion **1702** calculates FEC data **1809** from these fragmented media data packets **1803** to **1808.** For this calculation, the i-th byte from the beginning of each of the fragmented media data packets **1803** to **1808** is retrieved, the exclusive OR (XOR) of the retrieved bytes is calculated, and the result of this calculation is taken as the i-th byte of the FEC data **1809**. This means that the length of the FEC data **1809** is 20 bytes.

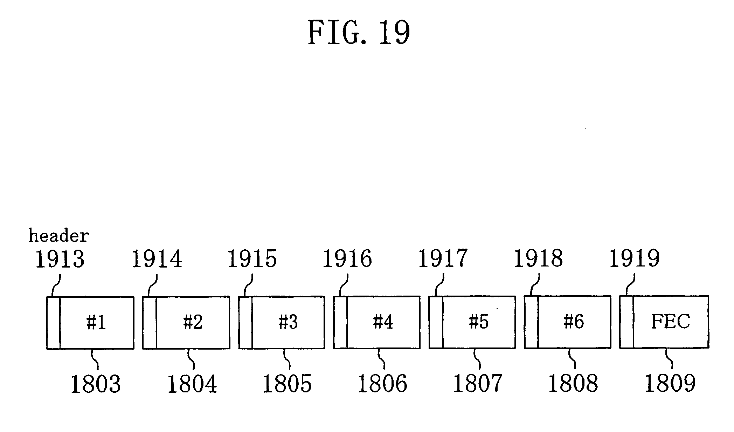

Fig. **19** shows an examples of how the packetizing portion **1703** in Fig. **17** operates. When the fragmented media data packets **1803** to **1808** and the FEC data **1809**, in addition to the pre-fragmented header **1801**, are input into the packetizing portion **1703**, they are converted into RTP packets and output by the packetizing portion **1703**. This means that RTP headers **1913**, **1914**, **1915**, **1916**, **1917**, **1918**, and **1919** are attached to the fragmented media data packets **1803** to **1808** and the FEC data packet **1809**, respectively, to generate a total of seven RTP packets, after which these RTP packets are outputted, as shown in Fig. **19.**

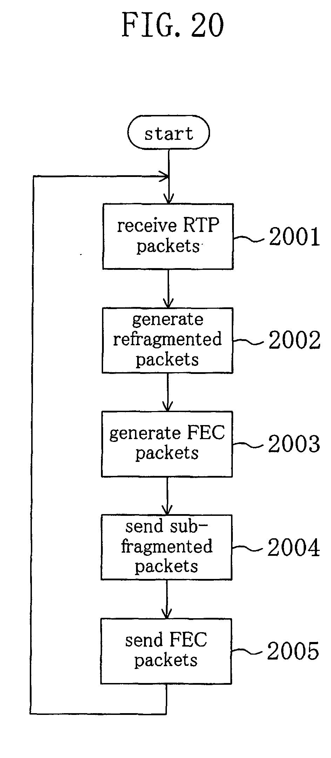

Fig. **20** shows an example of the operation of the sending device **1700** of Fig. **17**. First, in step 2001 the RTP packets including the media data are received from a higher layer. In step 2002, the payload portion is extracted from these RTP packets and is fragmented into a fixed number (for example six), and an RTP header is added to each fragmented media data packet (hereinafter called sub-fragmented data) to generate sub-fragmented packets. In step 2003, FEC packets are generated from these sub-fragmented packets. In step 2004, the sub-fragmented packets are transmitted, and in step 2005, the FEC packets are transmitted. Thus, the above steps are performed to generate sub-fragmented packets and FEC packets from the RTP packets received from a higher layer and then transmit the generated packets.

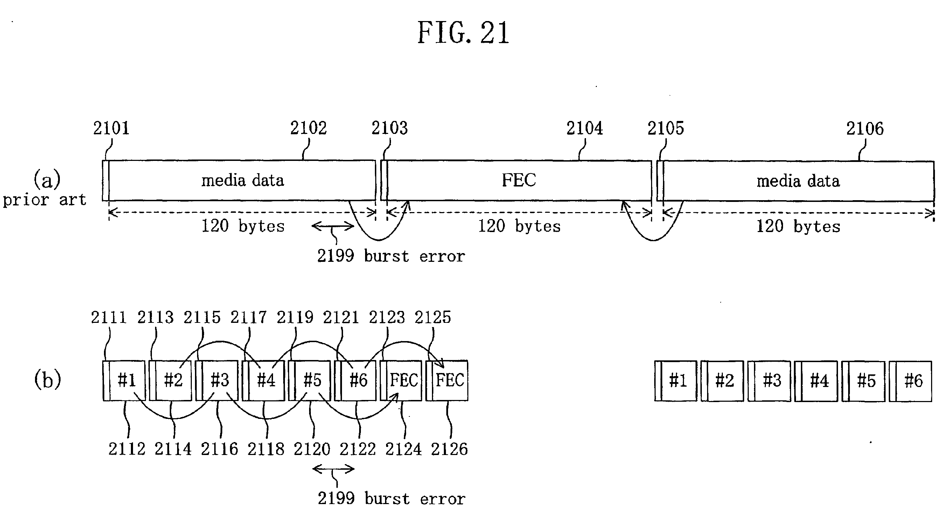

Fig. **21(a)** depicts the transmission of data using the conventional format of RFC 2733, and Fig. **21(b)** depicts the transmission of data according to the present invention in its seventh embodiment. In both diagrams the horizontal axis is the time axis.

In Fig. **21(a)**, numerals **2101** and **2102** respectively indicate a header and media data, which constitute a single RTP packet. Also numerals **2105** and **2106** respectively indicate a header and media data, which constitute a single RTP packet. Numeral **2104** is FEC data generated from the media data **2102** and **2106** using the conventional format of RFC 2733, and together with a header **2103** constitutes a single RTP packet. The length of the FEC data **2104** is the same as the length of the media data **2102** and **2106** at 120 bytes. With this conventional format, if for example the RTP packet including the media data **2102** is missing it is still possible to recover that missing RTP packet as long as the other RTP packet including the media data **2106** and the RTP packet including the FEC data **2104** can be received.

Let us consider here the use of wireless lines on the physical layer. Wireless lines by their nature cause bit errors and burst errors, which result in packet loss. Fig. **21(a)** shows the occurrence of a burst error **2199** equivalent to 20 bytes. It is possible to perform error correction using the RFC 2733 format here, however, it would require 120 bytes of FEC data.

On the other hand, in Fig. **21(b)** there are six sub-fragmented data packets, namely **2112, 2114, 2116, 2118, 2120,** and **2122,** generated from the media data **2102,** a first FEC data packet **2124** is generated from the odd-numbered sub-fragmented data packets **2112**, **2116**, and **2120**, and a second FEC data packet **2126** is generated from even-numbered sub-fragmented data packets **2114**, **2118**, and **2122.** The first and second FEC data packets **2124** and **2126** are each 20 bytes long. Numerals **2111**, **2113**, **2115**, **2117**, **2119**, **2121**, **2123**, and **2125** are RTP headers attached to the sub-fragmented data packets **2112**, **2114**, **2116**, **2118**, **2120**, and **2122** and the first and second FEC data packets **2124** and **2126**, respectively. Here, if the burst error **2199** equivalent to 20 bytes results in the loss of the two RTP packets including the sub-fragmented data **2120** and **2122**, those two lost RTP packets can be recovered by using the first and second FEC data **2124** and **2126.** The amount of FEC data used at this time is 40 bytes, which is one-third that of when the RFC 2733 format is used.

Comparing Fig. **21(a)** and Fig. **21(b)** it can be seen that the present embodiment enables an earlier start to error correction and can shorten delays thereof. With the RFC 2733 format of Fig. **21(a)**, the time at which the recovery of media data can begin is after the media data **2102**, the FEC data **2104**, and then the media data **2106** have been completely received. Conversely, with the present embodiment it is possible to start error correction earlier at the point when the sub-fragmented data packets **2112**, **2114, 2116, 2118, 2120, 2122,** which correspond to the media data **2120,** followed by the first and second FEC data packets **2124** and **2126** are completely received, as depicted in Fig. **21(b)**.

On the other hand, the length of media data is often drastically different (such as 120 bytes and 20 bytes, respectively) at the boundary between the Intra Picture and the Inter Picture in the video encoding format. With the conventional RFC 2733 format, the length of the FEC data was 120 bytes for both media data of a 120 byte length and media data of a 20 byte length. With the present embodiment, however, the smaller or the smallest of the media data before fragmentation is chosen to serve as the fragmentation length of the packets, and therefore various media data lengths can be handled flexibly.

Thus, with the present embodiment, it is possible to provide the same error correction capabilities as those of convention using a small amount of FEC data. Moreover, the period for starting the error correction process can be sped up and it is possible to more flexibly handle various media data lengths. That is, the fourth conventional problem can be solved.

Various selections can be made regarding the length of fragmentation (length of sub-fragmented data), the number of FEC data, and the combination of sub-fragmented data for use in creating FEC data. The number of RTP packets refragmented by the refragmenting portion **1701** can be determined from the ratio of the amount of data for use in error correction to the amount of transmitted data. Additionally, the length of fragmentation can be freely chosen to freely change the length of the FEC data. In the example of Fig. **19**, the length of the FEC data **1809** is the same as the length of fragmentation, and in the example of Fig. **21(b)** the total length of the FEC data **2124** and **2126** is twice the length of fragmentation. Furthermore, changing the number of sub-fragmented data used in creating a single FEC data packet makes it possible to change the error correction capabilities. In the example of Fig. **19** it is possible to recover the loss of any single sub-fragmented packet, and in the example of Fig. **21(b)** it is possible to recover the loss of any two consecutive sub-fragmented packets.

It should be noted that overhead accompanying the increase in headers must be taken into account, and accordingly if a ROHC (Robust Header Compression) format is used, it is possible to shorten by compression not only the RTP headers but the UDP/IP headers of the lower layer as well (C. Bormann et al., "RObust Header Compression (ROHC): Framework and four profiles: RTP, UDP, ESP, and uncompressed", RFC 3095, Internet Engineering Taskforce, Jul. 2001). In most cases the header can be compressed to about one byte, so with the present embodiment the overhead accompanying fragmentation is at most five bytes, which is approximately 4% (=5/120) of the original data amount. Compared to the effects of the present embodiment, this amount can be sufficiently ignored.

### Eighth Embodiment

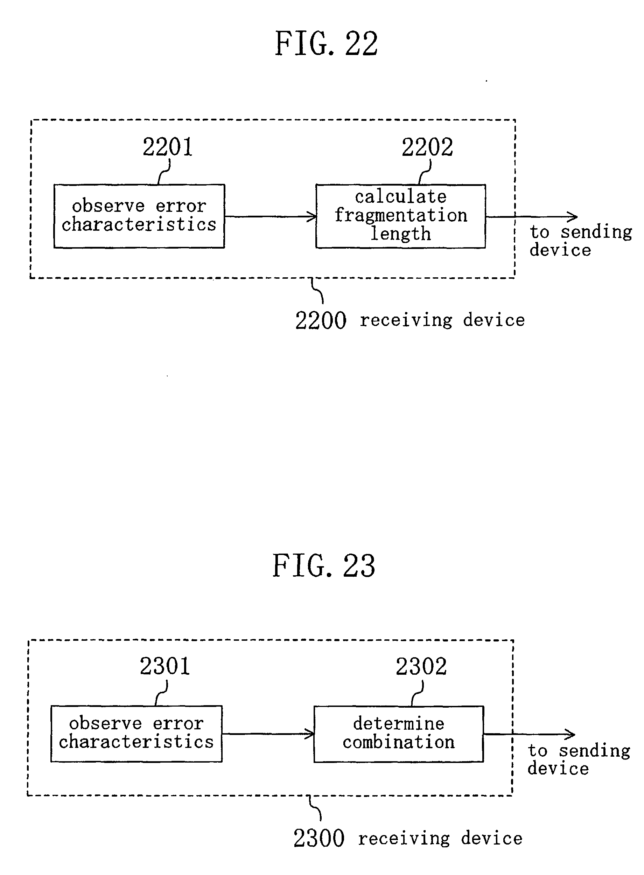

Fig. **22** shows an example of the configuration of a receiving device **2200** for achieving the data transmission method according to an eighth embodiment of the present invention. In Fig. **22**, numeral **2201** denotes an error characteristic observation portion, and numeral **2202** denotes a fragmentation length calculation portion. The error characteristic observation portion **2201** observes error characteristics via a physical layer interface. The error characteristics that are observed here include bit error frequency, burst error frequency, and burst error length. The fragmentation length calculation portion **2202** calculates the length of packet fragmentations based on observed error characteristics. For example, the fragmentation length calculation portion **2202** determines the packet fragmentation length from the burst error length and sends the result to the sending device. This means that if the fragmentation length is set to L (bytes) when the burst error length is L, then it is possible to ensure that the number of the sub-fragmented packets lost to burst error is at most two packets (see the burst error **2199** of Fig. **21(b))**. Also, if the frequency of bit errors is one error occurring per b bytes and the length of fragmentation is set to *b*/3 bytes, then one error will occur per three fragmented packets. This means that if a single FEC data packet is generated for every two fragmented packets, then only a single packet of the three packets will be lost to error (from the bit error frequency), and thus correction is always possible.

As a side note, if the frequency of bit errors is plotted on a graph in which the horizontal axis is the error rate and the vertical axis is the frequency, for example, then it ideally becomes a delta function. In reality, however, the frequency of bit errors becomes a Gaussian distribution or a Poisson distribution. in which the edges spread out. Accordingly, the worst value of the byte number *(b)* when a single error occurs can be determined from the worst value of the error rate when the critical region is 3%.

As shown above, with the present embodiment it is possible to achieve optimal error correction encoding as the result of being able to change the length of the FEC data by determining the length of fragmentation based on the result of observing the error characteristics. It should be noted that in the present embodiment, the length of fragmentation was determined by the receiving device **2200**, however, it is also possible to send the result of the observation of the error characteristics to the sending device and calculate the length of fragmentation in the sending device.

### Ninth Embodiment

Fig. **23** shows an example of the configuration of a receiving device **2300** for achieving the data transmission method according to a ninth embodiment of the present invention. In Fig. **23,** numeral **2301** denotes an error characteristic observation portion, and numeral **2302** denotes a combination determining portion. The error characteristic observation portion **2301** is for observing the frequency of bit errors, the frequency of burst errors, and burst error length, for example. The combination determining portion **2302** is for determining the combination of sub-fragmented data for use in calculating the FEC data using the burst error length, for example. For example, when the burst error length is L (bytes), by setting the length of fragmentation to L as described in the eighth embodiment, there is at most a two packet loss of consecutive sub-fragmented packets. Consequently, as shown in Fig. **21(b),** the first FEC data **2124** can be generated from the odd-numbered sub-fragmented data **2112**, **2116**, and **2120**, and the second FEC data **2126** can be generated from the even numbered sub-fragmented data **2114, 2118,** and **2122.**

In general, when *n* is an integer of one or more, it is possible to calculate one FEC data packet based on every (*n*+1) sub-fragmented data. This means that with respect to the burst error length L, when the length of fragmentation is given as L/*n* the number of consecutive packet losses is (*n*+1), so sub-fragmented data can be retrieved every (*n*+1) packets to generate one FEC data.

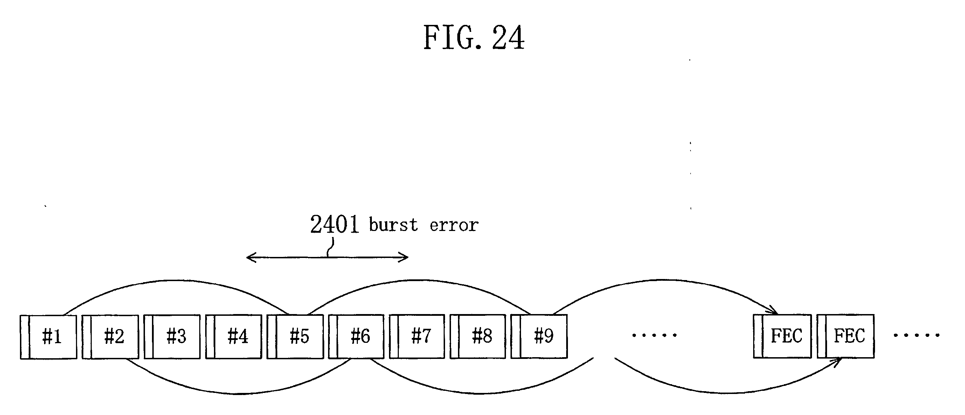

Fig. **24** shows the effect of the data transmission method according to the present embodiment (when *n*=3). According to the example of Fig. **24,** it is possible to restore media data even if a burst error **2401** equivalent to the length of three sub-fragmented data segments occurs.

As set forth in the above, with the present embodiment it is possible to achieve optimal error correction encoding as a result of the FEC data length being changeable by determining the combination of the sub-fragmented data based on the result of the observation of the error characteristics. It should be noted that in the present embodiment, the combination of the sub-fragmented data was determined by the receiving device **2300**, however, it is also possible to send the result of the observation of the error characteristics to the sending device and there determine the combination of the sub-fragmented data.

### Tenth Embodiment

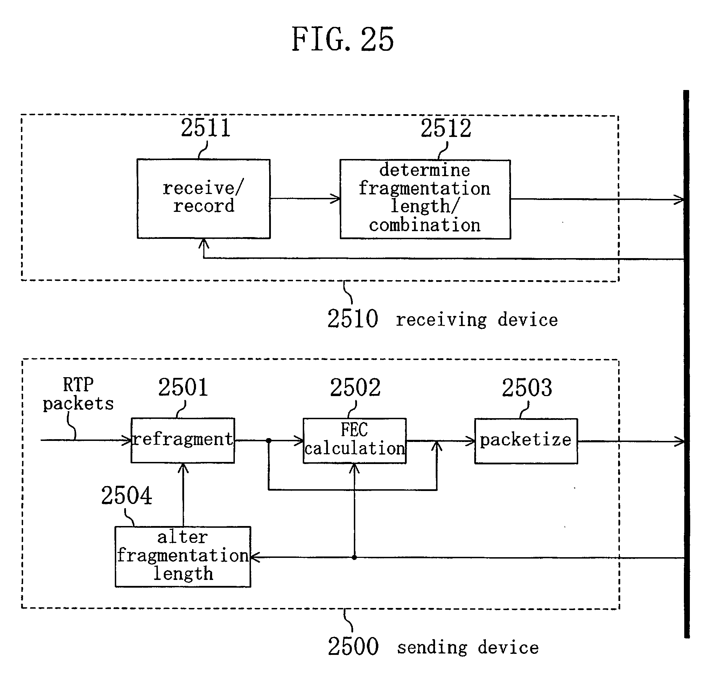

Fig. **25** shows an example of the configuration of a sending device **2500** and a receiving device **2510** for achieving the data transmission method according to a tenth embodiment of the present invention. The present embodiment is suitable for when the physical layer interface cannot use the observed error characteristics.

In the sending device **2500** of Fig. **25**, numeral **2501** denotes a refragmenting portion, numeral **2502** denotes an FEC calculating portion, numeral **2503** denotes a packetizing portion, and numeral **2504** denotes a fragmentation length altering portion. The refragmenting portion **2501,** the FEC calculating portion **2502**, and the packetizing portion **2503** are equivalent to those described in the seventh embodiment. The fragmentation length altering portion **2504** controls the refragmenting portion **2501** periodically at each fixed interval of time and so that the packet fragmentation length is altered within a fixed range such that error characteristics can be observed in the receiving device **2510**. For example, five packet fragmentation lengths of 20, 40, 60, 80, and 100 bytes can be used. It is also possible for the sending device **2500** to alter the packet length with instructions from the receiving device **2510** for the purpose of observing error characteristics.

In the receiving device **2510** of Fig. **25,** numeral **2511** denotes a receiving recording portion and numeral **2512** denotes a fragmentation length/combination determining portion. The receiving recording portion **2511** records the length and error characteristics of received packets for the purpose of observing the error characteristics. The fragmentation length/combination determining portion **2512** determines the packet fragmentation length or the combination of the sub-fragmented packets based on that recorded information.

To explain in more detail, with the receiving device **2510** the fragmentation length can be known from the received packets and packet loss can be detected from the sequence number in the RTP header (such as numeral **1913** in Fig. **19**). The receiving recording portion **2511** assigns any number *i* every fragmentation length and records the fragmentation length Bi of the packets, the number Ni of received packets, and the number Mi of lost packets. Moreover, the receiving recording portion **2511** determines Fi=Mi/(Ni+Mi) at each number i. Here, Fi is the packet loss rate, and the fragmentation length/combination determining portion **2512** selects a fragmentation length Bi such that this ratio becomes smaller. Then, the selected fragmentation length Bi is reported to the sending device **2500.**

### INDUSTRIAL APPLICABILITY

The present invention can contribute to improving the transmission method and relay method of media data over a network and in particular the Internet.

## Claims

1. A data transmission method comprising:
a step of fragmenting a data sequence obtained as encoded video or audio based on any of a time of the video or audio, a space in the video, quality of the video or audio, and information given by the creator of the video or audio, or a combination thereof; and
a step of executing an encryption process on only a portion of the fragmented data sequences.

2. A data transmission method comprising:
a step of fragmenting a data sequence obtained as encoded video or audio based on any of a time of the video or audio, a space in the video, quality of the video or audio, and information given by the creator of the video or audio, or a combination thereof; and
a step of executing an error correction encoding process on only a portion of the fragmented data sequence.

3. The data transmission method according to claim 2, further comprising a step of executing an encryption process on only a portion of the fragmented data sequences.

4. The data transmission method according to any one of claims 1 to 3, wherein the fragmentation based on time is achieved by fragmenting the data sequence according to markers that indicate a predicted relationship between elements constituting the video or audio.

5. The data transmission method according to any one of claims 1 to 3, wherein the fragmentation based on space is achieved by fragmenting video into center portions and peripheral portions.

6. The data transmission method according to any one of claims 1 to 3, wherein the fragmentation based on the quality of the video or audio is achieved by fragmenting the video or audio into low frequency components and high frequency components.

7. The data transmission method according to any one of claims 1 to 3, wherein the fragmentation based on information given by the creator of the video or audio is achieved by fragmenting the data sequence based on any of the time period the video or audio is broadcast, genre of the video or audio, cast in the video or audio, commercial segments in the video or audio, and contents set by the creators, or a combination thereof.

8. The data transmission method according to claim 2 or 3, wherein a single packet is generated from the fragmented data sequences and error correction information obtained by the error correction encoding process executed on said portion, and then transmitted.

9. The data transmission method according to claim 2 or 3, wherein two or more data sequences are taken as input and a single packet is generated from all data sequences and error correction information that has been obtained from a particular data sequence, and then transmitted.

10. A data transmission device for achieving the data transmission method according to any of claims 1 to 3.

11. A program for executing all or a portion of the steps of the data transmission method according to any of claims 1 to 3 with a computer.

12. A data relay method, comprising:
a step of fragmenting a data sequence obtained as encoded video or audio based on any of the time of the video or audio, a space in the video, quality of the video or audio, and information given by the creator of the video or audio, or a combination thereof, and then sorting these fragmented data sequences, only a portion of which have undergone at least one of an encryption process and an error correction encoding process; and
a step of allocating the fragmented data sequences to any one of a plurality of queues based on the results of this sorting;
wherein the frequency of the relay process differs for each queue, or the method for selecting the queue for retrieving data during the relay process is changeable, or the method for disposing data which cannot be fully processed differs for each queue.

13. The data relay method according to claim 12, wherein the fragmented data sequences are allocated to queues based on the rate of loss of the fragmented data sequences and the method of disposal of each queue.

14. The data relay method according to claim 12, wherein data sequences to which an error correction encoding format has been applied are allocated to queues based on the maximum allowable loss rate of the error correction encoding format and the method of disposal of each queue.

15. The data relay method according to claim 12, wherein the fragmented data sequences are allocated to queues based on the existence and format of encryption or error correction encoding and the method of disposal of each queue.

16. A data relay device for achieving the data relay method according to claim 12.

17. A program for executing all of a portion of the steps of the data relay method according to claim 12 with a computer.

18. A data relay method comprising:
a step wherein data to which a maximum value for a propagation delay time, which is determined by requirement specifications of an application, has been added are received from a plurality of sending devices; and
a step wherein, of the data from the plurality of sending devices, the data which have the smallest added maximum value for the propagation delay time value is relayed with priority.

19. The data relay method according to claim 18, wherein in a case in which two or more relay devices are connected in tandem, before a relay device relays and transmits data, the time during which data stays in that relay device is subtracted from the maximum value of the propagation delay time added to that data, the resulting value is added to the data to serve as a new maximum value for the propagation delay time, and then the data are transmitted.

20. The data relay method according to claim 18, wherein in a case in which two or more relay devices are connected in tandem, the relay devices receive from a plurality of sending devices data to which has been added a transmission time in addition to the maximum value for the propagation delay time, then the value of the current time minus the transmission time is subtracted from the maximum value of the propagation delay time added to the data, the resulting value is determined as a remaining propagation delay time, and the data with the smallest remaining propagation delay time are relayed with priority.

21. The data relay method according to claims 18 or 19,
wherein the propagation delay time required from the relay device to the receiving device is measured, and when the propagation delay time obtained by this measurement is larger than the maximum value of the propagation delay time added to the data, such data are not relayed.

22. The data relay method according to claim 20, wherein the propagation delay time required from the relay devices to the receiving device is measured, and when the propagation delay time obtained by this measurement is larger than the remaining propagation delay time, such data are not relayed.

23. A data transmission method in which data are fragmented into packets and transmitted by a sending device, the data transmission method comprising:
a first step, wherein the sending device again fragments the packets and generates sub-fragmented packets; and
a second step, wherein the sending device generates error correction packets from at least a single sub-fragmented packet and then transmits those packets.

24. The data transmission method according to claim 23, further comprising:
a third step, wherein error characteristics of the data transmitted in the second step are observed by a receiving device; and
a fourth step, wherein the fragmentation length of the packets is calculated based on the error characteristics.

25. The data transmission method according to claim 23, further comprising:
a third step, wherein error characteristics of the data transmitted in the second step are observed by a receiving device; and
a fourth step, wherein the combination of sub-fragmented packets for use in the generation of error correction packets is determined based on the error characteristics.

26. The data transmission method according to claim 24 or 25, further comprising:
a fifth step, wherein the packet fragmentation length is altered at a certain interval by the sending device; and
a sixth step, wherein the length and error characteristics of packets received by the receiving device are recorded;
wherein the packet fragmentation length or the combination of the sub-fragmented packets is determined in the fourth step based on the information recorded in the sixth step.

27. The data transmission method according to claim 18,
wherein in the first step the number of refragmented packets is determined from the ratio of the amount of data used for error correction to the amount of transmitted data.

28. A data transmission device having a sending device that fragments data into packets and transmits those packets, wherein the sending device comprises:
a refragmenting means for refragmenting packets to generate sub-fragmented packets, and
an error correction packet creation means for creating error correction packets from at least a single sub-fragmented packet.

29. The data transmission device according to claim 28, further including a receiving device for receiving data transmitted from the sending device, wherein the receiving device comprises:
an error characteristic observation means for observing the error characteristics of data transmitted from the sending device; and
a fragmentation length calculation means for calculating the fragmentation length of packets based on the error characteristics.

30. The data transmission device according to claim 28, further including a receiving device for receiving data transmitted from the sending device, wherein the receiving device comprises:
an error characteristic observation means for observing the error characteristics of data transmitted from the sending device; and
a determining means for determining the combination of sub-fragmented packets for use in the creation of error correction packets based on those error characteristics.

31. The data transmission device according to claim 29 or 30, wherein the sending device is further provided with an altering means for altering the packet fragmentation length for a certain interval for the observation of error characteristics with the receiving device.

32. The data transmission device according to claim 31,
wherein the receiving device further comprises:
a recording means for recording the length and error characteristics of received packets for the observation of error characteristics; and
a determining means for determining the packet fragmentation length or the combination of the sub-fragmented packets based on the recorded information.

33. The data transmission device according to claim 28,
wherein the refragmenting means is provided with a means for determining the number of refragmented packets from the ratio of the amount of data used in error correction to the amount of transmitted data.
